# EUROPÄISCHE PATENTANMELDUNG

(11) **EP 0 875 539 A2**
(43) Veröffentlichungstag der Anmeldung: **04.11.1998**
(21) Anmeldenummer: 98107912.2
(22) Anmeldetag: 30.04.1998
(51) Int. Cl.: C09D 1/04

(54) **Zweikomponenten-Beschichtungsmasse**

(30) Priorität: 02.05.1997 CH 1040/97; 07.05.1997 CH 1073/97
(71) Anmelder: Meier, Peter, 5200 Brugg (CH)
(72) Erfinder: Meier, Peter, 5200 Brugg (CH)
(74) Vertreter: Blum, Rudolf Emil Ernst

(57) **Zusammenfassung**

Die vorliegende Erfindung betrifft eine Zweikomponenten-Beschichtungsmasse, welche beim Härten im wesentlichen keinen Schwund aufweist und wobei die erste Komponente Wasserglas und die zweite Komponente ein abbindendes Mittel enthaltend Propylenglycolmonomethyletheracetat umfasst oder daraus besteht. Durch das Verhindern von Schwund bzw. Poren wird eine Rissbildung verhindert und damit die Dauerbeständigkeit erhöht.

## Beschreibung

Die vorliegende Erfindung betrifft eine Zweikomponenten-Beschichtungsmasse, welche beim Härten im wesentlichen keinen Schwund aufweist, eine hohe Haftung auf die zu beschichtenden Substrate aufweist und wobei die erste Komponente Wasserglas und die zweite Komponente ein abbindendes Mittel enthaltend Propylenglycolmonomethyletheracetat umfasst oder daraus besteht.

### Hintergrund der Erfindung

Insbesondere im Baubereich werden häufig Formkörper benötigt und verwendet, welche eine gute Wärmedämmung sicherzustellen haben und/oder welche verhältnismässig leicht und andererseits solide, bearbeitbar, wetterfest, feuerhemmend oder feuerfest und eben sind.

Es ist bekannt, für derartige Formkörper wärmedämmende Materialien auf der Grundlage von faserigen Isolationsmaterialien, z.B. Steinwolle zu verwenden. Die Oberfläche von solchen Isolationsmaterialien, z.B. Glaswolle ist allerdings nicht ausreichend nässegeschützt, stoss- und abriebfest bzw. feuerfest, so dass es bekannt ist noch eine Versiegelung auf dem Isolationsmaterial aufzubringen.

Sollen hochwertige Formkörper für den Baubereich auf der Grundlage eines beschichteten Körpers aus Isoliermaterial geschaffen werden, so muss das Versiegelungsmaterial dabei einer ganzen Reihe von Bedingungen entsprechen: Es muss einerseits eine hohe Druck- und Biege- bzw. Zugfestigkeit und eine geringe Wasseraufnahme, andererseits eine einfache Verarbeitbarkeit sowie eine gute Haftungsfähigkeit auf dem Substrat aufweisen. Im weiteren muss das fertige Versiegelungsmaterial nach dem Auftragen auf das Substrat rasch und ohne Bildung von Poren abhärten, und besonders bedeutsam - keine Neigung zu Schwund und zu Schwundrissen aufweisen. Ferner muss es insbesondere im Baubereich den Erfordernissen des Brandschutzes und der Toxizität genüge tun, d.h. es muss feuerfest und darf nicht brennbar sein und ausserdem keine giftigen Stoffe ab- oder ausscheiden.

In bezug auf den Aspekt der Haftfähigkeit, der Verarbeitbarkeit und der gewünschten raschen Aushärtbarkeit sind die im Stand der Technik bekannten Versiegelungsmaterialen auf der Grundlage von Kunststoffen durchaus befriedigend, insbesondere in bezug auf deren Brennbarkeit und zum Teil der in bezug auf deren Toxizität allerdings nicht. Tatsächlich neigen Kunststoffe vergleichsweise leicht zum Schmoren oder sogar zum Abbrennen und sind daher für viele Anwendungen im Baubereich ungeeignet bzw. unzulässig.

Auch eine Reihe von bekannten anorganischen Versiegelungsmaterialien, beispielsweise wässriges Wasserglas, sind insofern unbefriedigend, als deren Aushärtbarkeit entweder zu langsam ist, oder aber wenn diese beispielsweise durch Wärmezufuhr beschleunigt wird, entstehen Luftblasen und damit Poren und ein problematisches Schwundverhalten. Das durch das Schwundverhalten erzeugte Gefüge wiederum ist rissanfällig, womit die Versiegelung letztendlich in bezug auf ihre Langzeitbeständigkeit nicht befriedigend ist. Selbst ohne Aushärtungsbeschleunigung durch Wärmezufuhr weist das letztendlich ausgehärtete Wasserglas eine ausgesprochene Neigung zu Schwundrissen auf. Aus DE-A-42 15 468 ist ein Verbunddämmstoffkörper bekannt, der mit Wasserglas umschäumt wird.

Eine Aufgabe der vorliegenden Erfindung war es daher eine Beschichtungsmasse bereitzustellen, welche die oben genannten Nachteile nicht aufweist. Eine weitere Aufgabe der vorliegenden Erfindung war es ein Verfahren zur Herstellung einer Beschichtungsmasse bereitzustellen. Schliesslich war die Verwendung von Propylenglycolmonomethyletheracetat zur Herstellung einer Zweikomponenten-Beschichtungsmasse ein weiteres Ziel der vorliegenden Erfindung.

Diese Ziele werden erfindungsgemäss gemäss den unabhängigen Ansprüchen erreicht. Die bevorzugten Ausführungsformen sind in den abhängigen Ansprüchen aufgeführt.

### Beschreibung der Erfindung

In der erfindungsgemässen Zweikomponenten-Beschichtungsmasse enthält die erste Komponente ein Wasserglas und die zweite Komponente ein abbindendes Mittel enthaltend Propylenglycolmonomethyletheracetat.

Wassergläser bzw. Kieselgläser sind chemisch gesehen Siliciumdioxid/Alkalimetall-Mischoxide, oder anders betrachtet, Salze von Kieselsäuren, welche ihren Namen dem Umstand verdanken, dass sie wasserlöslich sind. Sie enthalten in wässriger Lösung wegen Hydrolyse in der Hauptsache Hydrogensalze wie M₃HSiO₄, M₂H₂SiO₄ und MH₃SiO₄ (wobei M Lithium, Kalium oder Natrium ist). Durch Stehenlassen der Wassergläser verdampft Wasser oder es kondensiert Kohlendioxid in die Wasserglaslösung wodurch Zersetzungsvorgänge ausgelöst werden und so Sole, Gele oder Fällungen von Kieselsäure entstehen. Diese Fähigkeit von Wasserglas zur Verfestigung bzw. zum Übergang zu einer gallertartigen Masse kann zur Bildung eines Versiegelungsüberzugs ausgenutzt werden. Üblicherweise weisen Lösungen von Wassergläsern einen Feststoffgehalt von bis ungefähr 10-50 Gew.-% auf. In einem leicht alkalisierten Milieu können diese langzeitlagerungsfähig gemacht werden, wobei sich die Wassergläser nicht bzw. nur unwesentlich in ihrer Struktur ändern.

Um die Wasserglas-Lösungen als Beschichtungsmasse verarbeitungsfähig handhaben zu können und sie anschliessend auszuhärten, ohne dass der unerwünschte Schwund bzw. Porenbildung stattfindet und gleichzeitig die besagte Aushärtung rasch stattfindet, wurde jetzt das erfindungsgemässe Zweikomponenten-Konzept gefunden. Die erste separate Komponente stellt dabei das aushärtbare Material, d.h. die Wasserglas-Komponente dar, welche ein Alkalisilikat (Wasserglas) enthält, während eine zweite separate Komponente, d.h. die Abbindungsmittel-Komponente enthaltend Propylenglycolmonomethyletheracetat, durch Zusammenmischen der beiden Komponenten das tatsächliche Aushärten der Wasserglas-Komponente bewirkt, ohne dass ein Schwund stattfindet und ohne dass Risse oder Poren gebildet werden. Wesentlich ist dabei, dass die zweite Komponente, d.h. die Abbindungsmittel-Komponente, Propylenglycolmonomethyletheracetat enthält.

Im Prinzip stellt auch die Wasserglas-Komponente selbst ein Bindemittel dar, welches aber im Unterschied zu der erfindungsgemäss eingesetzten Abbindungsmittel-Komponente wesentlich langsamer aushärtet. Somit ist die erfindungsgemäss erhältliche Zweikomponenten-Beschichtungsmasse ein Ergebnis der Aushärtung von zwei Komponenten, wobei sich die erste Komponente, d.h. die Wasserglas-Komponente vergleichsweise aushärtungsträge verhält, während die eigentliche Abbindungsmittel-Komponente sehr beschleunigend auf die Aushärtung auswirkt.

Im Prinzip kann die erfindungsgemässe Zweikomponenten-Beschichtungsmasse nur aus einer Wasserglaslösung und nur dem Abbindemittel Propylenglycolmonomethyletheracetat hergestellt werden, d.h. die Wasserglas-Komponente besteht ausschliesslich aus einer Wasserglaslösung und die Abbindungsmittel-Komponente besteht ausschliesslich aus Propylenglycolmonomethyletheracetat.

Die herkömmlich verwendeten Bindemittel (z.B. Gips, Kalk, Zement) inkorporieren vorzugsweise bei ihrer Zugabe zur ersten Komponente (Wasserglas-Komponente), welche einen Wasseranteil von bis zu ungefähr 80 bis 90 Gew.-% aufweisen kann, die Wassermoleküle in ihre Kristallstruktur, d.h. Lösungsmittelwasser wird in Kristallwasser verwandelt. Das Abbindungsmittel Propylenglycolmonomethyletheracetat dagegen inkorporiert nicht, sondern verdrängt bzw. ersetzt das Wasser im Kristallverbund des Wasserglas, womit sich in der flüssigen Phase letztlich ein Zweiphasensystem aus dem Ether sowie dem verdrängten Wasser bildet und das Wasser auf der Oberfläche verdampfen und die Beschichtungsmasse aushärten kann. Durch die Verdrängung des Wassers aus dem Wasserglas wird die Aushärtung erst in einem zeitlich/wirtschaftlich steuerbaren Rahmen ermöglicht. Sobald der Wasseranteil im Wasserglas unter die Grenze von 1 Gew.-% abgesunken ist, wird die Aushärtung im wesentlichen irreversibel.

Die Masse kann dadurch grundsätzlich so rasch abhärten, dass innerhalb von etwa 20 bis 60 Sekunden die Verarbeitung der Beschichtungsmasse (z.B. durch Beschichtung des entsprechenden Substrats) auch schon vollzogen sein muss. Besteht die Abbindungsmittel-Komponente ausschliesslich aus Propylenglycolmonomethyletheracetat so ist eine Verarbeitbarkeit von etwa 15 Minuten gegeben, welche durch Zugabe von weiteren Bindemitteln (z.B. Gips, Kalk oder Zement) weiter herabgesetzt werden kann. Damit kann die Verarbeitungszeit und die Härtungszeit in weiten Grenzen gesteuert werden.

Die Zweikomponenten-Beschichtungsmassen, welche ausschliesslich mittels einer reinen Wasserglas-Komponente und reinen Propylenglycolmonomethyletheracetat als Bindemittelskomponente erhalten werden, weisen bereits ein gutes Schwundrissverhalten auf, allerdings ist die Aushärtung bei Raumtemperatur vergleichsweise langsam.

In einer besonders bevorzugten Ausführungsform wird allerdings als Bindemittelkomponente nur das Propylenglycolmonomethyletheracetat verwendet, weil dieses flüssig ist und somit sich die Hantierbarkeit der Abbindekomponente vergleichsweise bequem gestaltet.

Völlig überraschend hat sich dabei gezeigt, dass, im Gegensatz zur Aushärtung von wässrigem Wasserglas unter Wärmezufuhr, bei der Verwendung von Propylenglycolmonomethyletheracetat als Anbindemittel unter Wärmezufuhr zur Beschleunigung der Aushärtung überhaupt keine Rissbildung auftritt, dass keinerlei Schwund und auch keine Poren und damit keine Herabsetzung der Qualität der Beschichtungsmasse auftritt. Damit ist die Verwendung von Propylenglycolmonomethyletheracetat als Abbindemittel den herkömmlichen Anbindemitteln weit überlegen, weil es die einfache Hantierbarkeit ermöglicht ohne, dass der mit dem Verdampfen von Wasser aus dem Wasserglas verbundene inakzeptable Schwund bzw. Luftporen, hingenommen werden muss.

In einer anderen bevorzugten Ausführungsform enthält eine oder beide Komponenten der erfindungsgemässen Zweikomponenten-Beschichtungsmasse, insbesondere die Wasserglaskomponente, mindestens einen weiteren Bestandteil. Der Grund liegt einerseits in der noch besseren Steuerbarkeit der Verarbeitungszeit solcher Zweikomponenten-Beschichtungsmassen gegenüber jenen, welche ausschliesslich mittels einer reinen Wasserglas-Komponente und einem reinen Bindemittel erhalten werden. Ausserdem können durch weitere geeignete Zusätze die Materialeigenschaften der Beschichtungsmasse beinflusst bzw. gesteuert werden.

Ausserdem sind das Bindemittel enthaltend Propylenglycolmonomethyletheracetat und das Wasserglas selbst vergleichsweise kostenintensive Bestandteile, so dass es sinnvoll ist einen kostengünstigeren Füllstoff in die Zweikomponenten-Beschichtungsmasse einzubeziehen. Zudem kann das Schwundverhalten sowie die Festigkeit und Bearbeitbarkeit der dadurch erhaltenen Zweikomponenten-Beschichtungsmassen noch verbessert werden.

Als weitere Bestandteile können in den Zweikomponenten-Beschichtungsmassen sowohl in der ersten Komponente enthaltend ein Wasserglas (Wasserglas-Komponente), als auch in der zweiten Komponente enthaltend Propylenglycolmonomethyletheracetat (Anbindungsmittel-Komponente) noch zusätzlich 0.1 bis 2 Gew.-% Netzmittel und 10-65 Gew.-% feinkörnige Zuschlagstoffe enthalten sein.

Besonders bevorzugt ist damit in der Wasserglas-Komponente ein Mengenanteil eines Wasserglases von ungefähr 10 bis 90 Gew.-% enthalten und in der Anbindungsmittel-Komponente ein Mengenanteil des abbindenden Propylenglycolmonomethyletheracetats von 10 bis 100, bevorzugt von 60 bis 95 Gew.-% enthalten. Ganz besonders bevorzugt ist ein Anteil von 80 bis 90 Gew.% an Propylenglycolmonomethyletheracetat in der Anbindungsmittel-Komponente vorhanden. Vorzugsweise enthält dabei das Wasserglas eine Mischung aus Natrium-, Kalium-, Lithiumsilicat oder es besteht daraus.

Neben dem Propylenglycolmonomethyletheracetat als abbindendes Mittel kann ausserdem noch ein weiteres abbindendes Mittel vorzugsweise ausgewählt aus der Gruppe bestehend aus gebranntem Kalk (CaO), gelöschten Kalk (Ca(OH)₂), kohlensauren Kalk (CaCO₃), totgebranntem Gips (CaSO₄), Zement, Hochofenschlacke oder Mischungen derselben in der zweiten Komponente enthalten sein. Auch andere hygroskopische Stoffe wie Phosphorpentoxid oder Säuren oder ein Superabsorber sind als wasseraufnehmende Abbindemittel denkbar. Aufgrund der ausgeprägten Hygroskopizität der vorstehend genannten Bindemittel können die in der Wasserglaslösung enthaltenden Wassermoleküle mit weniger zeitaufwendige Verdampfung und damit ohne den mit dem Verdampfen einhergehenden Schwund in Kristallwasser umgewandelt werden, und es kann so eine rasche Aushärtung erzielt werden. Ein Vergleich zwischen den verschiedenen Kalksorten zeigt, dass die Hygroskopizität des gebrannten Kalks (CaO) gegenüber dem gelöschten Kalk (Ca(OH)₂)und dem kohlensauren Kalk (CaCO₃) am stärksten ist, womit zur Aushärtung des Wasserglas vergleichsweise weniger gebrannter Kalk als beispielsweise gelöschter Kalk benötigt wird. Daraus ergibt sich, dass gebrannter Kalk (Weissfeinkalk, CaO) für die Durchführung der vorliegenden Erfindung ganz besonders bevorzugt ist, sofern neben dem Propylenglycolmonomethyletheracetat überhaupt noch eine Anbindemittel erwünscht ist.

Die für das Aushärten erforderliche Menge an Bindemittel kann je nach Bedarf individuell eingestellt werden und hängt von der gewünschten Aushärtezeit ab. Die Aushärtezeit hängt seinerseits von der gewünschten Verarbeitungsfähigkeit der Zweikomponenten-Beschichtungsmasse ab. Eine lange Verarbeitungsfähigkeit, kann durch einen weniger hygroskopisch wirkendes Bindemittel oder durch seine Menge eingestellt werden.

Die Figur 1 zeigt die Anbindezeiten als Funktion vom Bindemittelanteil, welcher für die Gesamtzusammensetzung der Zweikomponenten-Beschichtungsmasse verwendet wird. In dieser graphischen Darstellung ist die Anbindezeit auf der Ordinate und der relative Anteil an Abbindungsmittel-Komponente auf der Abszisse aufgetragen. Die Anbindungsmittel-Komponente der Figur 1 enthält dabei neben dem Propylenglycolmonomethyletheracetat noch Gips. Die jeweils nicht geknickte Kurve stellt die abgerundete, extrapolierte Kurve auf der Grundlage rechnerisch ermittelter Werte dar, während die geknickte Kurve diejenigen Verhältnisse widerspiegelt, wie sie durch Messwerte ermittelt wurden. Die beiden unteren Kurven A und B steller die Verarbeitungszeit dar, d.h. die Zeit innerhalb der die abgemischte Masse noch verarbeitungsfähig ist, während die oberen Kurven C und D die Zeit zur Erreichung der Stapelhärte darstellen. Mit Stapelhärte ist die Festigkeit gemeint, welche das Stapeln der hergestellten Formkörper erlaubt, ohne dass es zur Deformation des Formkörpers oder der Beschichtung kommt. Aus der graphischen Darstellung ist einerseits klar ersichtlich, dass die tatsächliche Aushärtungszeit für die Beschichtung bzw. den Formkörper naturgemäss länger ist als die Verarbeitungszeit. Andererseits erkennt man auch das rapide Abfallen der Abbindezeit bei höher werdendem Anteil der Abbindekomponente.

Bei Verwendung von gebranntem Kalk als Abbindungsmittel-Komponente zusätzlich zum Propylenglycolmonomethyletheracetat verlaufen die entsprechenden Kurven noch wesentlich steiler, so dass bei einem Bindemittelanteil von ungefähr 5% bereits innerhalb von ungefähr 10 Minuten die Stapelhärte erreicht wird. Dies liegt an der wesentlich höheren Hygroskopizität des gebrannten Kalks.

Ein Zuschlagstoff bzw. Füllstoff ist, wie bereits erwähnt, insbesondere aus Kostengründen von hohem Interesse, weil beispielsweise Sand billiger als Wasserglas und Abbindekomponente ist. Der Zuschlagstoff wird dabei in einer bevorzugten Ausführungsform in einer Menge von zwischen 10 bis 65 Gew.-% mindestens in einer der beiden Wasserglas- und der Abbindungsmittel-Komponente eingesetzt. In einer bevorzugten Ausführungsform ist der Füllstoff nur in der Wasserglas-Komponente enthalten und wird darin gut vermengt. In einer anderen bevorzugten Ausführungsform liegt die besagte Abbindungsmittel-Komponente als Gemisch aus dem Bindemittel und dem Füllstoff vor.

Das erfindungsgemässe Ziel des zu beseitigenden bzw. zu unterbindenden Schwundrissverhaltens wird allerdings bei Zugabe eines Füllstoffes nur dann im gewünschten Masse erreicht, wenn dieser eine bestimmte Packungsdichte durch eine definierte Korngrössenverteilung aufweist. Eine ungünstige Korngrössenverteilung der Zuschlagsstoffe bzw. Füllstoffe(z.B. Sand) kann bewirken, dass sich beim letztendlichen Abbinden der beiden Komponenten ein derartiges Absetzen und Einstellen des Beschichtungsgefüges vollzieht, dass sich Poren, Risse oder andere Schwunderscheinungen ausbilden, welche die Beständigkeit des somit erzeugten Formkörpers oder der Beschichtung herabsetzt.

Dem Fachmann ist die sogenannte Sieblinie geläufig : Sie ist eine kartesische Darstellung, in welcher auf der Ordinate der Durchgang der Körner in Massen-% aufgetragen wird und auf der Abszisse sind die grösser werdenden Sieböffnungen in mm aufgetragen. Letztendlich gibt die Sieblinie den prozentuellen Anteil der Körner an, welcher mittels einer bestimmten Sieböffnung zurückgehalten wird und welcher Anteil diese Sieböffnung ungehindert passieren kann. Damit stellt die Sieblinie eine graphische Darstellung der Korngrössenverteilung dar.

Für die erfindungsgemässen Zweikomponenten-Beschichtungsmassen ist dabei ein Füllstoff, d.h. ein Sand mit der Sieblinie der Figur 2 besonders bevorzugt.

Die Sieblinie ist ein wesentliches Merkmal für die Füllstoffe, welche zur Herstellung der erfindungsgemässen Zweikomponenten-Beschichtungsmassen verwendet werden. Abweichungen von der Sieblinie von bis ungefähr 10 % sind akzeptabel. Bei weitergehenden Abweichungen ist eine Unterscheidung zwischen den Bereichen von 0 bis ca. 0,65 mm Korngrösse und dem Bereich von ca. 0,65 bis 1,700 mm Korngrösse vorzunehmen : Die Kurve kann für den Bereich von 0,65 bis 1,700 mm durchaus stärker ansteigen (Abweichungen nach oben) als in der Sieblinie gemäss Figur 2. Flacht dagegen die Kurve in diesem Bereich mit einer Abweichung von mehr als 10 % ab (Abweichung nach unten), entsteht in der Regel eine Zweikomponenten-Beschichtungsmasse mit grossen, vom Rand ausgehenden Schwundrissen. Im Bereich von 0 bis ca. 0,65 mm Korngrösse dagegen sind Abweichungen von mehr als 10 % in der Regel kritisch und führen zu einer Verschlechterung des Schwundverhaltens.

In einer bevorzugten Ausführungsform ist noch in mindestens einer der beiden Komponenten, d.h. der Wasserglas-Komponente und/oder der Abbindungsmittel-Komponente ein Netzmittel enthalten. Dieses bewirkt insbesondere bei Anwesenheit von Füllstoffen, beispielsweise einem feinkörnigen Sand eine umfassende Benetzung zwischen den Körnern der aushärtenden Beschichtungsmasse. Das Netzmittel setzt dabei die Oberflächenspannung zwischen den einzelnen Bestandteilen der Wasserglas-Komponente und der Abbindungsmittel-Komponente herab. Die Wahl des Netzmittel ist insofern nicht kritisch, als jedes Netzmittel grundsätzlich verwendet werden kann. Das Netzmittel bewirkt ferner eine bessere Benetzung bzw. Haftung bei der Beschichtung eines Körpers aus Fasermaterial, z.B. einer Steinwolleplatte.

Ein weiterer Bestandteil, welcher sowohl in der Wasserglas-Komponente als auch in der Abbindungsmittel-Komponente enthalten sein kann, sind Fasern, beispielsweise Glasfasern. Diese erlauben der erfindungsgemässen, frisch hergestellten und zu verarbeitenden Zweikomponenten-Beschichtungsmasse eine leichtere Beschichtungsfähigkeit und stellt auch eine Bewehrung der ausgehärteten Masse dar.

Um eine gute, geschmeidige Ausbringung der erfindungsgemäss hergestellten Zweikomponenten-Beschichtungsmasse auf das Substrat zu gewährleisten, werden der Abbindungsmittel-Komponente in einer bevorzugten Ausführungsform diverse mineralische Bestandteile zugeben. Diese können Silica Fume, Flugasche, Tone, Kreide, Vermiculit oder Mischungen derselben umfassen oder daraus bestehen. Besonders bevorzugt ist der Opalinuston mit der Handelsbezeichnung Opalit, welcher die Oberfläche der Zweikomponenten-Beschichtungsmasse erhärtet und somit eine bessere Schleifbarkeit der ausgehärteten Masse ermöglicht.

Ein weiterer Aspekt der vorliegenden Erfindung betrifft ein Verfahren zur Herstellung einer Zweikomponenten-Beschichtungsmasse, wobei eine erste Komponente enthaltend Wasserglas und eine zweite Komponente umfassend ein abbindendes Mittel enthaltend Propylenglycolmonomethyletheracetat separat zubereitet werden, anschliessend vermengt und in die gewünschte Form gebracht oder auf das gewünschte zu beschichtende Substrat aufgetragen werden.

Zur Beschleunigung der Aushärtung der Zweikomponenten-Beschichtungsmasse wird die aufgebrachte Masse einer Wärmebehandlung unterworfen, so dass das verdrängte Wasser beschleunigt verdampfen kann. Überraschenderweise tritt durch die Wärmebehandlung keinerlei Porenbildung und damit keine Risse und kein Schwund auf.

In einer bevorzugten Ausführungsform enthält die Wasserglas-Komponente dabei ungefähr 10 bis 90 Gew.-% Wasserglas, ungefähr 0.1 bis 2 Gew.-% Netzmittel und ungefähr 10-65 Gew.-% feinkörnige Zuschlagstoffe (insbesondere entsprechend der Sieblinie gemäss Figur 2), während die Abbindungsmittel-Komponente bevorzugt ungefähr 10 bis 100 Gew.-% bevorzugt 60 bis 90 Gew.-% Propylenglycolmonomethyletheracetat als Bindemittel und ganz besonders bevorzugt zwischen 80 bis 90 Gew.-% Propylenglycolmonomethyletheracetat als Bindemittel sowie ungefähr 0.1 bis 2 Gew.-% Netzmittel und ungefähr 10-65 Gew.-% Zuschlagstoffe enthält.

Das Verfahren wird mittels einer wässrigen Wasserglas-Komponente und einer flüssigen Abbindungsmittel-Komponente durchgeführt. Die Durchführung des Verfahrens mittels zwei flüssiger Komponenten ist deshalb vorteilhaft, weil so ein maschinelles Zusammenmischen der beiden Komponenten sowie der Verarbeitung der aus der Zusammenmischung resultierenden Beschichtungsmasse möglich ist.

Die maschinell oder manuell hergestellte Beschichtungsmasse kann anschliessend zur Herstellung eines Formkörpers durch Beschichtung eines Substrats verwendet werden. Bezüglich der Beschichtungsdicke der zu applizierenden Zweikomponenten-Beschichtungsmasse sind grundsätzlich keinerlei Beschränkungen oder Einschränkungen vorgegeben. Für die Beschichtung einer Dämmungsplatte aus Steinwolle wird vorzugsweise eine Schichtdicke von ungefähr 3 bis 10 mm gewählt.

Durch die in der Beschichtungsmasse vereinten optimalen, vielfältigen Eigenschaften kann je nach Substrat ein neuartiger Baustoff hergestellt werden, der, ähnlich wie Holz, geschnitten, geschliffen, gebohrt, geschraubt, geleimt werden kann. Anhand der erfindungsgemäss hergestellten Beschichtungsmasse können tragende oder nichttragende, wärmeeisolierende, schalldämmende, feuerfeste, wasserabweisende, raumtrennende Elemente hergestellt werden, wobei die erfindungsgemässe Beschichtung Zug- und Druckeigenschaften übernehmen kann.

Neben den oben genannten Eigenschaften kommt noch hinzu, dass aufgrund der mineralischen Zusammensetzung der erfindungsgemässen Zweikomponenten-Beschichtungsmasse keinerlei ökologische Belastungsgefahr von der ausgehärteten Beschichtung ausgeht. Die Beschichtung scheidet keine Giftstoffe aus, dies gilt sowohl bei der Applikation, als auch bei der Einwirkung von Wärme, Kälte, Wasser, Säuren und Basen sowie anderen Umwelteinflüssen. Auch nach hoher Hitzeeinwirkung bleibt die erfindungsgemäss hergestellte Beschichtung stabil und auch ein rasches Abschrecken, beispielsweise durch Löschwasser beeinträchtigt die Stabilität bzw. Festigkeit des Materials nicht.

Ausserdem betrifft die vorliegende Erfindung noch die Verwendung der erfindungsgemäss hergestellten Zweikomponenten-Beschichtungsmassen zur Bereitstellung von porenfreien, schleifbaren, harten, schlagfesten, wasserundurchlässigen jedoch dampfdurchlässigen, feuerfesten, wärme- und kälteunempfindlichen, gegen Strahleneinwirkung sehr stabilen, weitgehend resistenten, anorganischen Formkörpern. Auch eine Verwendung für Abdichtungen und andere Beschichtungen ist möglich. Die erfindungsgemässe Zweikomponenten-Beschichtungsmasse kann damit auch für Deckenverputze im Innen- und Aussenbereich, für Umhüllungsmassen, Abdichtungsschichten für Halterungsgegenstände, wie Fensterflügel und Rahmen oder Bänke, Blumentöpfe verwendet werden.

Schliesslich betrifft die vorliegende Erfindung noch die Verwendung von Propylenglycolmonomethyletheracetat zur Herstellung und Aushärtung von der oben beschriebenen Zweikomponenten-Beschichtungsmassen sowie zur Auzshärtung von Bindemittel-enthaltenden Zusammensetzungen.

Die vorliegende Erfindung soll nun im folgenden anhand von zwei Beispielen näher erläutert werden.

### Beispiel 1 (für die Verarbeitung der Zweikomponenten-Beschichtungsmasse von Hand)

### a) Zubereitung der Wasserglas-Komponente

8 kg Natriumsilikat werden mit 81 g Netzmittel (Lutensol GD 70) und 112 g Glasfasern vermengt und gut durchgemischt. Die Wasserglas-Komponente ist langzeitlagerfähig und kann durchaus über einen Zeitraum von Tagen unter Luftabschluss stehengelassen werden ohne dass sie abhärtet.

### b) Zubereitung der Abbindungsmittel-Komponente

13,6 kg Sand gemäss der Sieblinie nach Tabelle 1 und 1,4 kg Propylenglycolmonomethyletheracetat (Dowanol PMA-C) werden vermengt. Die Korngrössenverteilung des Sands (Zuschlagsstoff) ist dabei von Bedeutung, um dem Schwund vorzubeugen.

### c) Vermischen und Verarbeiten der beiden Komponenten

Die Abbindungsmittel-Komponente wird dann in die flüssige Wasserglas-Komponente eingerührt und kann anschliessend unmittelbar auf eine zu beschichtende Oberfläche von Steinwolle gegossen werden. Die applizierte Beschichtungsmasse wird dann mit einem Spachtel verteilt und kompaktiert. Innerhalb von ungefähr 5 Minuten härtet die Beschichtungsmasse auf dem Steinwolle-Substrat aus, ohne dass dabei ein Schwund zu beobachten ist. Die ausgehärtete Beschichtungsmasse haftet letztlich auf dem Substrat derart gut, dass ein Versuch es davon loszureissen mit einem Abriss innerhalb des Substrates endet und nicht innerhalb der Kontaktfläche zwischen Beschichtung und Substrat.

Die erfindungsgemässe Beschichtung kann 5 Minuten lang mit dem Gasbrenner beflammt werden, ohne dass das Bindemittel der darunter liegende Steinwolle zu brennen oder zu schmoren beginnt.

### Beispiel 2 (für die Verarbeitung der Zweikomponenten-Beschichtungsmasse mit der Maschine)

### a) Zubereitung der Wasserglas-Komponente

6,4 kg Natriumsilikat werden mit 65 g Netzmittel (Lutensol GD 70), 11 kg Sand gemäss der Sieblinie von Figur 2 und 90 g Glasfasern vermengt und gut durchgemischt. Die Korngrössenverteilung des Sands (Zuschlagsstoff) gemäss der Sieblinie ist dabei von Bedeutung, um so dem Schwundverhalten der resultierenden Beschichtungsmasse vorzubeugen.

### b) Zubereitung der Abbindungsmittel-Komponente

1.2 kg Propylenglycolmonomethyletheracetat (Dowanol PMA-C) sowie 0.2 kg totgebrannter Gips (CaSO₄) werden zur Abbindemittelkomponente vermengt.

### c) Vermischen und Verarbeiten der beiden Komponenten

Die flüssige Abbindungsmittel-Komponente wird anschliessend in die Wasserglas-Komponente eingerührt und kann anschliessend unmittelbar auf eine zu beschichtende Oberfläche z.B. aus Steinwolle gegossen werden. Die applizierte Beschichtungsmasse wird anschliessend mit einem Rakel verteilt und allenfalls mit Walzen kompaktiert. Innerhalb von ungefähr 5 Minuten erhärtet die Beschichtungsmasse auf dem Substrat, ohne dass dabei ein Schwund zu beobachten ist.

Die ausgehärtete Beschichtungsmasse haftet letztlich auf dem Substrat derart gut, dass ein Versuch es davon loszureissen mit einem Abriss innerhalb der Steinwolle endet und nicht innerhalb der Kontaktfläche zwischen Steinwolle-Substrat und Beschichtung.

## Patentansprüche

1. Zweikomponenten-Beschichcungsmasse, welche beim Härten im wesentlichen keinen Schwund aufweist und wobei die erste Komponente ein Wasserglas und die zweite Komponente ein abbindendes Mittel enthaltend Propylenglycolmonomethyletheracetat umfasst oder daraus besteht.

2. Zweikomponenten-Beschichtungsmasse gemäss Anspruch 1, dadurch gekennzeichnet, dass die Wasserglas-Komponente 10 bis 90 Gew.-% Wasserglas und die Abbindungsmittel-Komponente 10 bis 100 Gew.-%, bevorzugt 60 bis 95 Gew.-%, ganz besonders bevorzugt 80 bis 90 Gew.-% Propylenglycolmonomethyletheracetat umfasst.

3. Zweikomponenten-Beschichtungsmasse gemäss Anspruch 1 oder 2, dadurch gekennzeichnet, dass die Wasserglas-Komponente weiterhin Verbindungen ausgewählt aus der Gruppe bestehend aus 0.1 bis 2 Gew.-% Netzmittel und 10-65 Gew.-% feinkörnige Zuschlagstoffe und die Abbindungsmittel-Komponente weiterhin Verbindungen ausgewählt aus der Gruppe bestehend aus 0.1 bis 2 Gew.-% Netzmittel und 10-65 Gew.-% Zuschlagstoffe umfasst.

4. Zweikomponenten-Beschichtungsmasse gemäss Anspruch 3, dadurch gekennzeichnet, dass das abbindende Mittel neben Propylenglycolmonomethyletheracetat ausserdem noch mindestens eine Verbindung ausgewählt aus der Gruppe bestehend aus gebranntem Kalk (CaO), gelöschten Kalk (Ca(OH)₂), kohlensauren Kalk (CaCO₃), totgebranntem Gips (CaSO₄), Zement, Hochofenschlacke oder Mischungen derselben enthält.

5. Zweikomponenten-Beschichtungsmasse gemäss einem der Ansprüche 1 bis 4, dadurch gekennzeichnet, dass die Wasserglaskomponente Natriumsilicat umfasst oder daraus besteht.

6. Zweikomponenten-Beschichtungsmasse gemäss einem der Ansprüche 1 bis 5, dadurch gekennzeichnet, dass die Wasserglaskomponente ausserdem noch Zuschlagsstoffe, insbesondere Sand, gemäss einer Sieblinie, insbesondere gemäss der Sieblinie der Figur 2, umfasst oder daraus besteht, wobei die Abweichung von der Sieblinie nicht mehr als ungefähr 10% ausmachen darf.

7. Zweikomponenten-Beschichtungsmasse gemäss einem der Ansprüche 1 bis 6, dadurch gekennzeichnet, dass mindestens eine der beiden Komponenten noch zusätzliche mineralische Bestandteile enthält, welche ausgewählt sind aus der Gruppe bestehend aus Glasfasern, Silica Fume, Flugasche, Tone, Kreide, Vermiculit oder Mischungen derselben.

8. Verfahren zur Herstellung einer Zweikomponenten-Beschichtungsmasse dadurch gekennzeichnet, dass eine erste flüssige Komponente enthaltend Wasserglas und eine zweite flüssige Komponente enthaltend Propylenglycolmonomethyletheracetat separat zubereitet werden, anschliessend vermengt und in die gewünschte Form gebracht oder auf das gewünschte Substrat aufgetragen und ausgehärtet werden.

9. Verfahren gemäss Anspruch 8, dadurch gekennzeichnet, dass die Aushärtung mittels Erwärmung der zubereiteten Beschichtungsmasse beschleunigt wird.

10. Verfahren gemäss einem der Ansprüche 8 oder 9, dadurch gekennzeichnet, dass die erste Komponente 10 bis 90 Gew.-% Wasserglas, 0.1 bis 2 Gew.-% Netzmittel und 10-65 Gew.-% feinkörnige Zuschlagstoffe enthält, und dass die zweite Komponente 10 bis 100 Gew.-%, bevorzugt 60 bis 95 Gew.-%, ganz besonders bevorzugt 80 bis 90 Gew.-% Propylenglycolmonomethyletheracetat, sowie 0.1 bis 2 Gew.-% Netzmittel und 10-65 Gew.-% Zuschlagstoffe enthält.

11. Verwendung der Zweikomponenten-Beschichtungsmasse der Ansprüche 1 bis 7 zur Beschichtung eines Körpers aus einem faserigen Isolationsmaterial, insbesondere Steinwolle.

12. Verwendung von Propylenglycolmonomethyletheracetat zur Herstellung und Aushärtung von Zweikomponenten-Beschichtungsmassen insbesondere nach einem der Ansprüche 1 bis 7.
